# EUROPEAN PATENT SPECIFICATION

(11) **EP 3 255 807 B1**
(45) Date of publication and mention of the grant of the patent: **05.12.2018**
(21) Application number: 15890265.0
(22) Date of filing: 29.04.2015
(51) Int. Cl.: H04B 3/32

(54) **METHOD, APPARATUS AND SYSTEM FOR SENDING SIGNAL**
VERFAHREN, VORRICHTUNG UND SYSTEM ZUM SENDEN EINES SIGNALS
PROCÉDÉ, APPAREIL ET SYSTÈME D'ENVOI DE SIGNAL

(43) Date of publication of application: 13.12.2017
(73) Proprietor: Huawei Technologies Co., Ltd., Longgang District Shenzhen Guangdong 518129 (CN)
(72) Inventor: TU, Jianping, Guangdong 518129 (CN)
(74) Representative: Gill Jennings & Every LLP
(86) International application number: PCT/CN2015/077820
(87) International publication number: WO 2016/172885

(56) References cited:
- EP-A1- 3 154 230
- CN-A- 1 655 470
- CN-A- 101 197 592
- CN-A- 101 197 593
- CN-A- 102 301 612
- US-A1- 2010 046 738
- VLADIMIR OKSMAN ET AL: "The ITU-T's new g.vector standard proliferates 100 mb/s dsl", IEEE COMMUNICATIONS MAGAZINE, IEEE SERVICE CENTER, PISCATAWAY, US, vol. 48, no. 10, 1 October 2010 (2010-10-01), pages 140-148, XP011341175, ISSN: 0163-6804, DOI: 10.1109/MCOM.2010.5594689

## Description

### TECHNICAL FIELD

The present invention relates to the communications field, and in particular, to a method and an apparatus for sending a signal, and a system.

### BACKGROUND

xDSL (Digital Subscriber Line) is a high-speed data transmission technology for transmission in an unshielded twisted pair (UTP). xDSL for passband transmission uses a frequency division multiplexing (FDM) technology to enable the xDSL to coexist with a plain old telephone service (POTS) at a same twisted pair. The xDSL occupies a high frequency band, and the POTS occupies a baseband portion lower than four kilohertz (KHz). At a signal receive end, a POTS signal is separated from an xDSL signal by a splitter. A system providing multiple xDSL access is referred to as a DSL access multiplexer (DSLAM).

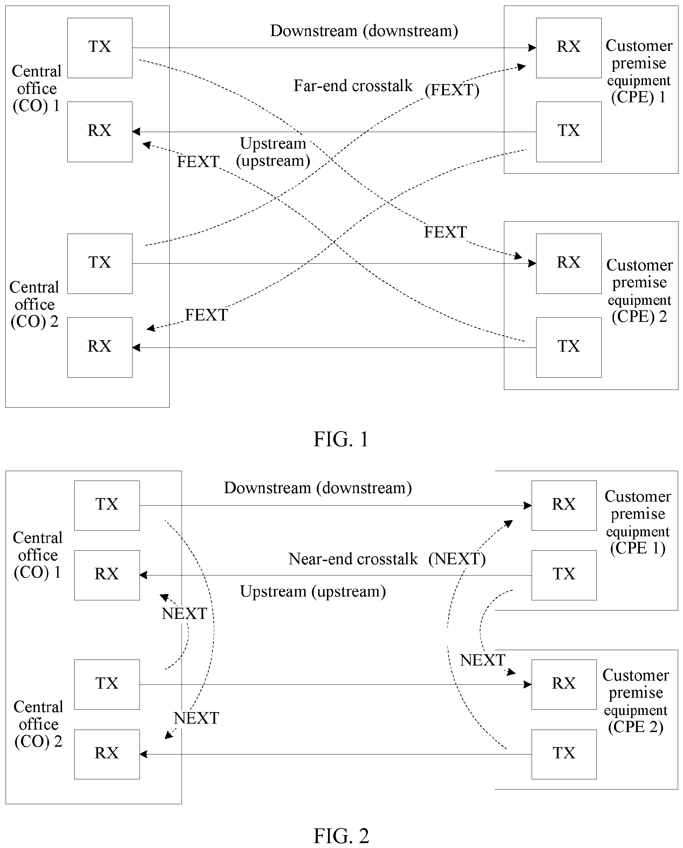

FIG. 1 and FIG. 2 show a line between a device at a central office (CO) end and customer premises equipment (CPE). Because of an electromagnetic induction principle, multiple signals received by the DSLAM may interfere with each other, and the interference is referred to as crosstalk (Crosstalk). The crosstalk includes near-end crosstalk (NEXT) and far-end crosstalk (FEXT), where energy of both the NEXT and the FEXT is stronger in a higher frequency band. In existing xDSL technologies, such as the ADSL, ADSL2, ADSL2+, VDSL, and VDSL2, upstream and downstream channels use frequency division Duplex (FDD). Impact of the NEXT on system performance may be ignored, and main impact comes from the FEXT. However, because a frequency band used by the xDSL becomes wider, the FEXT affects transmission performance of VDSL2 more severely. At present, it is proposed in the industry to use a vectoring technology to perform joint reception and transmission at a CO end to cancel the FEXT.

A VDSL2 standard defines eight configuration profiles (Profile) referred to as 8a, 8b, 8c, 8d, 12a, 12b, 17a, and 30a. Lines of multiple profiles may also exist in a vectoring system, but subcarrier intervals of the lines of multiple profiles are required to be the same. Because a subcarrier interval of the original 30a profile is two times the subcarrier intervals of the other profiles, the 30a profile and the other profiles cannot coexist in the vector. At present, to enable the 30a and the 17a to coexist, the International Organization for Standardization ITU-T is formulating a next-generation VDSL2 standard, that is, VDSL3. The most important feature of VDSL3 is that a 30a line having a subcarrier interval that is the same as that of 17a is specified, so that when the 17a line (that is, a line of the 17a profile) coexists with the 30a line (that is, a line of the 30a profile), normal vectoring cancellation may be performed within 17 M. However, in one aspect, the 17a line has an out-of-band spectrum beyond 17 M. Although a low-pass filter may be used, power of out-of-band spectrum at 17 to 21 MHz is still greater than -80 dBm/Hz. In a downstream direction, an out-of-band spectrum for sending a signal on the 17a line may generate relatively strong FEXT interference to a frequency greater than 17 M of the 30a line. In another aspect, a spectrum greater than 17 M on the 30a line may also generate FEXT interference to an out-of-band spectrum of the 17a line. When a modem at the receive end of the 17a line uses single sampling, this part of out-of-band interference may be aliased to a band of the 17a line. As a result, a rate of the 17a line is lowered.

In some cases, when VDSL2 CPE is not upgraded to VDSL3 CPE after a central office device is upgraded to VDSL3, a VDSL2 signal may be sent in the VDSL3 in a downward compatible manner. In this case, double sampling may cancel interference of a signal sent out of a VDSL2 frequency band to a VDSL3 line. However, the VDSL3 line still has out-of-band crosstalk to the VDSL2 line, and interference is caused within a VDSL2 frequency band after the VDSL2 CPE performs the single sampling.

EP3154230A1 relates to crosstalk estimation method, device, and system. US20100046738A1 relates to method and apparatus for DMT crosstalk cancellation.

### SUMMARY

Embodiments of the present invention provide a method and an apparatus for sending a signal, and a system, to cancel out-of-band crosstalk of a VDSL3 line to a VDSL2 line.

In particular, the present disclosure provides a method according to claim 1, an apparatus according to claim 6 and a system according to claim 11. Further technical features of each of these embodiments are defined in the respective dependent claims.

Based on the foregoing technical solutions, according to the embodiments of the present invention, a first signal is generated in a VDSL2 frequency band by using to-be-sent data, a frequency band that is not overlapped with the VDSL2 frequency band is selected from a VDSL3 frequency band, and a first pre-compensation signal is generated according to an out-of-band crosstalk signal of VDSL3 to VDSL2 and a cancellation coefficient for out-of-band crosstalk of the VDSL3 line to the VDSL2 line, where the first pre-compensation signal is used to cancel out-of-band far-end crosstalk of the VDSL3 to the VDSL2 after the first pre-compensation signal is received by customer premises equipment, and finally the first signal and the first pre-compensation signal are synthesized into a second signal, and the second signal is sent to VDSL2 customer premises equipment. According to the embodiments of the present invention, a pre-compensation signal of out-of-band crosstalk of the VDSL3 line to the VDSL2 line is generated out of the VDSL2 band, so that a signal at a VDSL2 receive end does not include out-of-band interference.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of far-end crosstalk;
FIG. 2 is a schematic diagram of near-end crosstalk;
FIG. 3 is a flowchart of a method for sending a signal according to an embodiment of the present invention;
FIG. 4 is a schematic diagram of crosstalk estimation according to an embodiment of the present invention;
FIG. 5 is a flowchart of a method for sending a signal according to an embodiment of the present invention;
FIG. 6 is a schematic diagram of a vectoring control entity according to an embodiment of the present invention;
FIG. 7 is a schematic diagram of a vectoring control entity according to an embodiment of the present invention;
FIG. 8 is a schematic diagram of a vectoring control entity according to an embodiment of the present invention;
FIG. 9 is a schematic structural diagram of a system according to an embodiment of the present invention; and
FIG. 10 is a schematic structural diagram of a communications apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

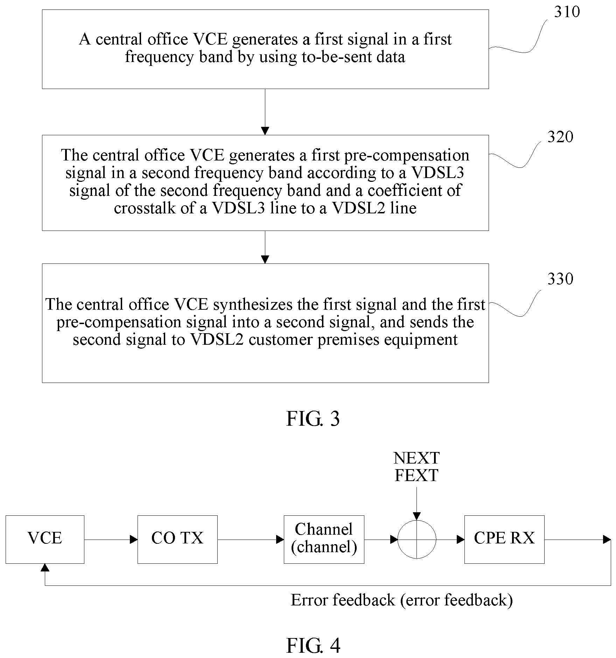

As shown in FIG. 3, an embodiment of the present invention discloses a method for sending a signal, including the following steps.

Step 310: A vectoring control entity (VCE) at a central office end generates a first signal in a first frequency band by using to-be-sent data, where the first frequency band means a VDSL2 frequency band.

In this embodiment, the vectoring control entity VCE of the central office generates the first signal in the VDSL2 frequency band, that is, a frequency band from 0 MHz to 17.6 MHz, by using the to-be-sent data. The first signal may be understood as an in-band VDSL2 signal, and is equivalent to the in-band VDSL2 signal that is sent when a VDSL3 port is degraded to a VDSL2 port. That the VDSL3 port is degraded to the VDSL2 port is equivalent to that the VDSL3 port does not send any signal in 17.6-35.2 MHz and only works in the frequency band from 0 MHz to 17.6 MHz.

Step 320: The VCE at the central office end generates a first pre-compensation signal in a second frequency band according to a VDSL3 signal of the second frequency band and a coefficient of crosstalk of a VDSL3 line to a VDSL2 line, where the second frequency band means a VDSL3 frequency band that is not overlapped with the VDSL2 frequency band, and the first pre-compensation signal is used to cancel out-of-band far-end crosstalk of the VDSL3 line to the VDSL2 line after the first pre-compensation signal is received by customer premises equipment.

The VDSL2 frequency band is from 0 MHz to 17.6 MHz, a VDSL3 frequency band is from 0 MHz to 35.2 MHz, and the non-overlapped frequency band is from 17.6 MHz to 35.2 MHz. In this embodiment, the frequency band from 17.6 MHz to 35.2 MHz is selected to generate the first pre-compensation signal.

After the customer premises equipment receives a signal sent from the central office end, the first pre-compensation signal cancels the out-of-band far-end crosstalk of the VDSL3 line to the VDSL2 line. This is equivalent to that the received signal includes only the first signal.

As shown in FIG. 4, the coefficient of crosstalk of the VDSL3 line to the VDSL2 line is obtained in the following manner: the VCE sends a pilot sequence to the customer premises equipment, VDSL2 CPE feeds back an error according to interference of the VDSL3 line to the VDSL2 line, and the VCE calculates the coefficient of crosstalk of the VDSL3 line to the VDSL2 line according to an error feedback. The VCE generates the first pre-compensation signal in the second frequency band according to the VDSL3 signal of the second frequency band and the coefficient of crosstalk of the VDSL3 line to the VDSL2 line.

Step 330: The VCE at the central office end synthesizes the first signal and the first pre-compensation signal into a second signal, and sends the second signal to VDSL2 customer premises equipment.

The first signal and the first pre-compensation signal are equivalent to in-band VDSL3 signals after being generated. The central office uses double sampling to send the second signal to the VDSL2 customer premises equipment, and an in-band signal is not affected after the VDSL2 customer premise equipment performs single sampling.

In this embodiment of the present invention, the central office uses the VDSL3 port to send a VDSL2 signal, and generates, out of the VDSL2 band, the first pre-compensation signal of out-of-band crosstalk of the VDSL3 line to the VDSL2 line, so that an out-of-band VDSL2 signal received by the VDSL2 customer premises equipment is eliminated, and the in-band signal is not affected after single sampling is performed on a CPE side.

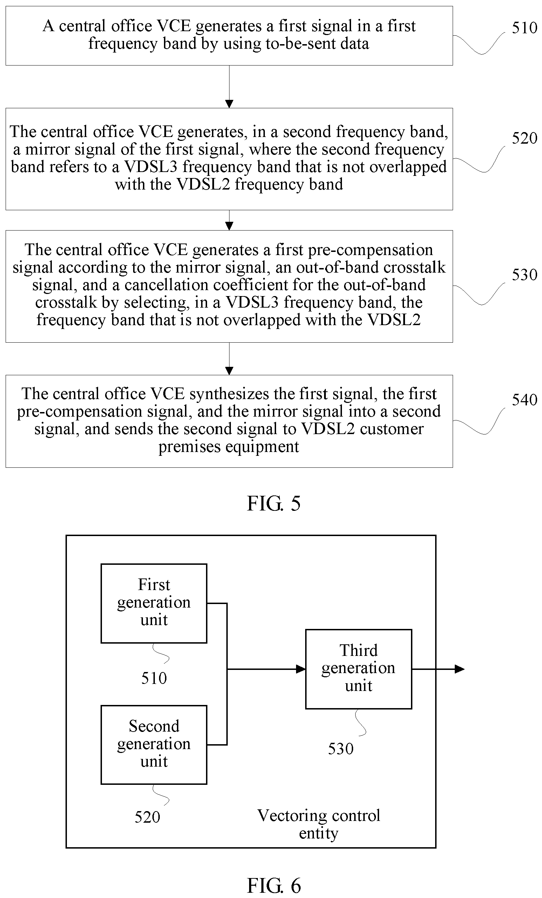

As shown in FIG. 5, an embodiment of the present invention further discloses a method for sending a signal, including the following steps.

Step 510: A VCE at a central office end generates a first signal in a first frequency band by using to-be-sent data, where the first frequency band means a VDSL2 frequency band.

The vectoring control entity (VCE) of a central office generates the first signal in the VDSL2 frequency band, that is, a frequency band from 0 MHz to 17.6 MHz, by using the to-be-sent data. The first signal may be understood as an in-band VDSL2 signal, and is equivalent to the in-band VDSL2 signal that is sent when a VDSL3 port is degraded to a VDSL2 port. That the VDSL3 port is degraded to the VDSL2 port is equivalent to that the VDSL3 port does not send any signal in 17.6-35.2 MHz and only works in the frequency band from 0 MHz to 17.6 MHz.

Step 520: The VCE at the central office end generates, in a second frequency band, a mirror signal of the first signal, where the second frequency band means a VDSL3 frequency band that is not overlapped with the VDSL2 frequency band.

Preferably, the mirror signal is a conjugate symmetrical signal of the first signal.

Step 530: The VCE at the central office end generates a first pre-compensation signal in the second frequency band according to a VDSL3 signal of the second frequency band and a coefficient of crosstalk of a VDSL3 line to a VDSL2 line, where the first pre-compensation signal is used to cancel out-of-band far-end crosstalk of the VDSL3 line to the VDSL2 line after the first pre-compensation signal is received by VDSL2 customer premises equipment.

Step 540: The VCE at the central office end synthesizes the first signal, the first pre-compensation signal, and the mirror signal into a second signal, and sends the second signal to the VDSL2 customer premises equipment.

The method further includes the following steps:

Step 550: Generate a second pre-compensation signal in the second frequency band according to the mirror signal and a coefficient of crosstalk of the mirror signal to the VDSL3 line.

Step 560: Synthesize the VDSL3 signal and the second pre-compensation signal into a third signal and send the third signal to VDSL3 customer premises equipment.

As shown in FIG. 6, an embodiment of the present invention further discloses a vectoring control entity, including a first generation unit 610, a second generation unit 620, and a third generation unit 630.

The first generation unit 610 is configured to generate a first signal in a VDSL2 frequency band by using to-be-sent data.

The first generation unit generates the first signal in the VDSL2 frequency band, that is, a frequency band from 0 MHz to 17.6 MHz, by using the to-be-sent data. The first signal may be understood as an in-band VDSL2 signal, and is equivalent to the in-band VDSL2 signal that is sent when a VDSL3 port is degraded to a VDSL2 port. That the VDSL3 port is degraded to the VDSL2 port is equivalent to that the VDSL3 port does not send any signal in 17.6-35.2 MHz and only works in the frequency band from 0 MHz to 17.6 MHz.

The second generation unit 620 is configured to generate a first pre-compensation signal in a second frequency band according to a VDSL3 signal of the second frequency band and a coefficient of crosstalk of a VDSL3 line of the second frequency band to a VDSL2 line, where the second frequency band means a VDSL3 frequency band that is not overlapped with the VDSL2 frequency band, and the first pre-compensation signal is used to cancel out-of-band far-end crosstalk of the VDSL3 line to the VDSL2 line after the first pre-compensation signal is received by VDSL2 customer premises equipment.

The VDSL2 frequency band is from 0 MHz to 17.6 MHz, a VDSL3 frequency band is from 0 MHz to 35.2 MHz, and the non-overlapped frequency band is from 17.6 MHz to 35.2 MHz. In this embodiment, the frequency band from 17.6 MHz to 35.2 MHz is selected to generate the first pre-compensation signal.

In this embodiment of the present invention, a central office uses the VDSL3 port to send a VDSL2 signal, and generates, out of the VDSL2 band, the first pre-compensation signal of out-of-band crosstalk of the VDSL3 line to the VDSL2 line. After the VDSL2 customer premises equipment receives a signal sent from the central office, the first pre-compensation signal cancels the out-of-band far-end crosstalk of the VDSL3 line to the VDSL2 line. This is equivalent to that the received signal includes only the first signal. The in-band signal is not affected after VDSL2 CPE side performs single sampling.

The third generation unit 630 is configured to synthesize the first signal and the first pre-compensation signal into a second signal, and send the second signal to the VDSL2 customer premises equipment.

The first signal and the first pre-compensation signal are equivalent to in-band VDSL3 signals after being generated. The central office uses double sampling to send the second signal to the customer premises equipment. Therefore, there is no out-of-band mirror signal.

The second generation unit 620 specifically includes:
a first sending unit, configured to send a pilot sequence to the VDSL2 customer premises equipment;
a first receiving unit, configured to receive an error signal fed back by the VDSL2 customer premises equipment; and
a first calculation unit, configured to calculate the coefficient of crosstalk of the VDSL3 line to the VDSL2 line according to the error signal.

In this embodiment of the present invention, the VDSL3 port is used to send a VDSL2 signal, and the first pre-compensation signal of out-of-band crosstalk of the VDSL3 to the VDSL2 is generated out of the VDSL2 band, so that an out-of-band VDSL2 signal received on a CPE side is eliminated, and the in-band signal is not affected after CPE at a user end performs single sampling.

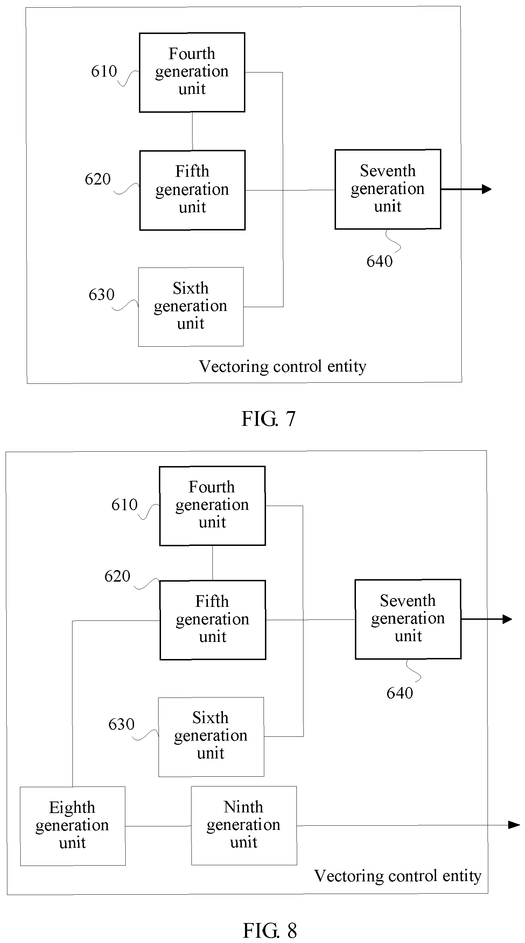

As shown in FIG. 7, an embodiment of the present invention further discloses a vectoring control entity, including:
a fourth generation unit 710, configured to generate a first signal in a first frequency band by using to-be-sent data, where the first frequency band means a VDSL2 frequency band, and the VDSL2 frequency band is from 0 MHz to 17.6 MHz; a fifth generation unit 720, configured to generate, in a second frequency band, a mirror signal of the first signal, where the second frequency band means a VDSL3 frequency band that is not overlapped with the VDSL2 frequency band, where a VDSL3 frequency band is from 0 MHz to 35.2 MHz, and the non-overlapped frequency band is from 17.6 MHz to 35.2MHz; a sixth generation unit 730, configured to generate a first pre-compensation signal in the second frequency band according to a VDSL3 signal of the second frequency band and a coefficient of crosstalk of a VDSL3 line to a VDSL2 line, where the first pre-compensation signal is used to cancel out-of-band far-end crosstalk of the VDSL3 line to the VDSL2 line after the first pre-compensation signal is received by VDSL2 customer premises equipment; and a seventh generation unit 740, configured to synthesize the first signal and the first pre-compensation signal into a second signal, and send the second signal to the VDSL2 customer premises equipment.

After the VDSL2 customer premises equipment receives the second signal, the first pre-compensation signal cancels the out-of-band far-end crosstalk of the VDSL3 line to the VDSL2 line. This is equivalent to that the received signal includes only the first signal.

As shown in FIG. 8, to cancel interference of the first pre-compensation signal to a normal VDSL3 signal, the vectoring control entity shown in FIG. 7 further includes: an eighth generation unit 750 that generates a second pre-compensation signal in the second frequency band according to the mirror signal and a coefficient of crosstalk of the mirror signal to the VDSL3 line; and a ninth generation unit 760, configured to synthesize the VDSL3 signal and the second pre-compensation signal into a third signal, and send the third signal to VDSL3 customer premises equipment. The VDSL3 signal received by the VDSL3 customer premises equipment includes a cancellation signal that cancels crosstalk of the mirror signal to the VDSL3 line. The cancellation signal cancels a crosstalk signal, so as to eliminate impact of crosstalk of the mirror signal to the VDSL3 line.

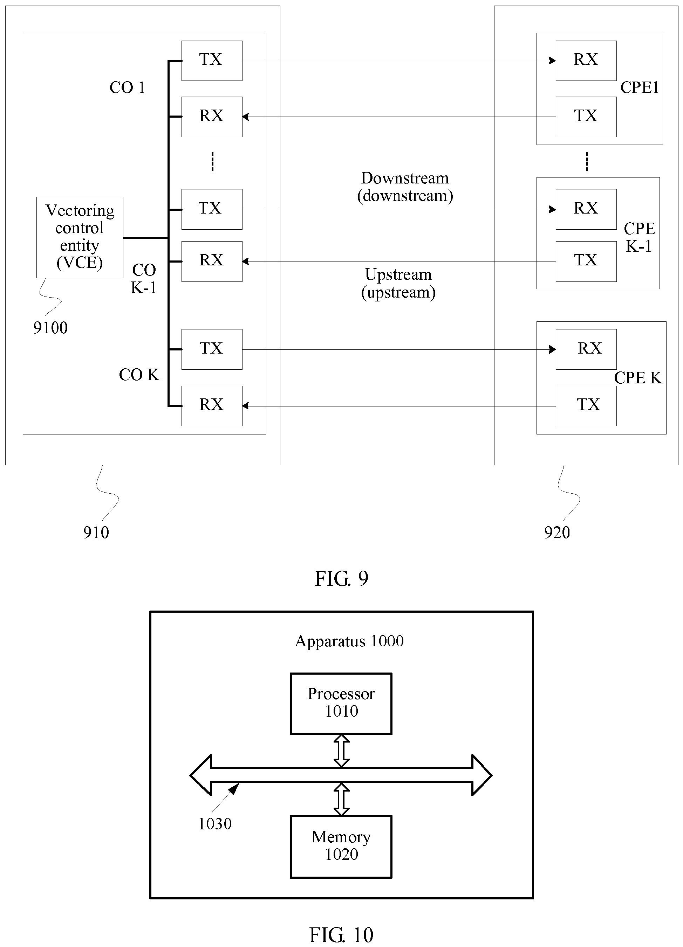

As shown in FIG. 9, an embodiment of the present invention further discloses a system, including a central office end 910 and a user end 920. The central office end 910 includes a vectoring control entity 9100, where the vectoring control entity 9100 may be the vectoring control entity described in FIG. 6, or may be the vectoring control entity described in FIG. 7. The user end 920 includes customer premises equipments CPE1, ..., CPE K-1, and CPE K.

Specifically, in an embodiment, a signal generated by the vectoring control entity 9100 is sent to transceiver units CO 1 RX/TX, ..., CO K-1 RX/TX, and CO K RX/TX at the central office end. The transceiver units CO 1 RX/TX, ..., CO K-1 RX/TX, and CO K RX/TX at the central office end send, by means of a communication line, the signal to transceiver units CPE1 RX/TX, ..., CPE K-1 RX/TX, and CPE K RX/TX of the customer premises equipment.

As shown in FIG. 10, an embodiment of the present invention further discloses a data communications apparatus, including a processor 1010, a memory 1020, and a bus system 1030. The processor 1010 is connected to the memory 1020 by using the bus system 1030, the memory 1020 is configured to store an instruction, and the processor 1010 is configured to execute the instruction stored by the memory 1020.

The processor 1010 is configured to generate a first signal in a first frequency band by using to-be-sent data, where the first frequency band means a VDSL2 frequency band; generate a first pre-compensation signal in a second frequency band according to a VDSL3 signal of the second frequency band and a coefficient of crosstalk of a VDSL3 line to a VDSL2 line, where the second frequency band refers a VDSL3 frequency band that is not overlapped with the VDSL2 frequency band, and the first pre-compensation signal is used to cancel out-of-band far-end crosstalk of the VDSL3 line to the VDSL2 line after the first pre-compensation signal is received by customer premises equipment; and synthesize the first signal and the first pre-compensation signal into a second signal, and send the second signal to VDSL2 customer premises equipment.

In another embodiment, the processor is further configured to generate a first signal in a first frequency band by using to-be-sent data, where the first frequency band means a VDSL2 frequency band; generate, in a second frequency band, a mirror signal of the first signal, where the second frequency band means a VDSL3 frequency band that is not overlapped with the VDSL2 frequency band; generate a first pre-compensation signal according to a VDSL3 signal of the second frequency band and a coefficient of crosstalk of the VDSL3 line to the VDSL2 line, where the first pre-compensation signal is used to cancel out-of-band far-end crosstalk of the VDSL3 line to the VDSL2 line after the first pre-compensation signal is received by VDSL2 customer premises equipment; and synthesize the first signal, the first pre-compensation signal, and the mirror signal into a second signal, and send the second signal to the VDSL2 customer premises equipment.

Specifically, for details of a specific implementation process of the processor 1010, refer to the corresponding descriptions of the flowcharts shown in FIG. 3 and FIG. 4, and details are not described herein again.

It should be understood that in this embodiment of the present invention, the processor 1010 may be a central processing unit (CPU), or the processor 1010 may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor, or the processor may be any conventional processor, or the like.

The memory 1020 may include a read-only memory and a random access memory, and provide an instruction and data to the processor 1010. A part of the memory 1020 may further include a non-volatile random access memory. For example, the memory 1020 may further store information about a device type.

The bus system 1030 may further include a power bus, a control bus, a status signal bus, and the like, in addition to a data bus. However, for clear description, various types of buses in the figure are marked as the bus system 1030.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on multiple network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementations of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for sending a signal, the method being performed by a vectoring control entity, comprising:
generating (310) a first signal in a first frequency band by using to-be-sent data, wherein the first frequency band means a VDSL2 frequency band;
generating (320) a first pre-compensation signal in a second frequency band according to a VDSL3 signal of the second frequency band and a coefficient of crosstalk of a VDSL3 line to a VDSL2 line, wherein the second frequency band means a VDSL3 frequency band that is not overlapped with the VDSL2 frequency band, and the first pre-compensation signal is used to cancel out-of-band far-end crosstalk of the VDSL3 line to the VDSL2 line after the first pre-compensation signal is received by VDSL2 customer premises equipment; and
synthesizing (330) the first signal and the first pre-compensation signal into a second signal, and sending the second signal to the VDSL2 customer premises equipment;
wherein the coefficient of crosstalk of the VDSL3 line to the VDSL2 line is obtained in the following manner:
sending a pilot sequence to the VDSL2 customer premises equipment;
receiving an error signal fed back by the VDSL2 customer premises equipment; and
calculating the coefficient of crosstalk of the VDSL3 line to the VDSL2 line according to the error signal.

2. The method according to claim 1, wherein the first pre-compensation signal is equal to a product of the VDSL3 signal of the second frequency band and the coefficient of crosstalk.

3. The method according to claim 1 or 2 further comprising:
generating, in a second frequency band, a mirror signal of the first signal, wherein the second frequency band means a VDSL3 frequency band that is not overlapped with the VDSL2 frequency band; and
synthesizing the first signal and the first pre-compensation signal into a second signal, and sending the second signal to the VDSL2 customer premises equipment comprises:
synthesizing the first signal, the first pre-compensation signal, and the mirror signal into the second signal, and sending the second signal to the VDSL2 customer premises equipment;

4. The method according to claim 3, further comprising:
generating a second pre-compensation signal in the second frequency band according to the mirror signal and a coefficient of crosstalk of the mirror signal to the VDSL3 line; and
synthesizing the VDSL3 signal and the second pre-compensation signal into a third signal and sending the third signal to VDSL3 customer premises equipment.

5. The method according to claim 3 or 4, wherein the mirror signal is a conjugate symmetrical signal of the first signal.

6. A vectoring control entity, comprising:
a first generation unit (510), configured to generate a first signal in a first frequency band by using to-be-sent data, wherein the first frequency band means a VDSL2 frequency band;
a second generation unit (520), configured to generate a first pre-compensation signal in a second frequency band according to a VDSL3 signal of the second frequency band and a coefficient of crosstalk of a VDSL3 line of the second frequency band to a VDSL2 line, wherein the second frequency band means a VDSL3 frequency band that is not overlapped with the VDSL2 frequency band, and the first pre-compensation signal is used to cancel out-of-band far-end crosstalk of the VDSL3 line to the VDSL2 line after the first pre-compensation signal is received by VDSL2 customer premises equipment; and
a third generation unit (530), configured to synthesize the first signal and the first pre-compensation signal into a second signal, and send the second signal to the VDSL2 customer premises equipment;
wherein the second generation unit specifically comprises:
a first sending unit, configured to send a pilot sequence to the VDSL2 customer premises equipment;
a first receiving unit, configured to receive an error signal fed back by the VDSL2 customer premises equipment; and
a first calculation unit, configured to calculate the coefficient of crosstalk of the VDSL3 line to the VDSL2 line according to the error signal.

7. The vectoring control entity according to claim 6, wherein the first pre-compensation signal is equal to a product of the VDSL3 signal of the second frequency band and the coefficient of crosstalk.

8. The vectoring control entity according to claim 6 or 7, further comprising:
a fifth generation unit, configured to generate, in a second frequency band, a mirror signal of the first signal, wherein the second frequency band means a VDSL3 frequency band that is not overlapped with the VDSL2 frequency band; and
a seventh generation unit, configured to synthesize the first signal, the first pre-compensation signal, and the mirror signal into the second signal, and send the second signal to the VDSL2 customer premises equipment.

9. The vectoring control entity according to claim 8, further comprising:
an eighth generation unit, configured to generate a second pre-compensation signal in the second frequency band according to the mirror signal and a coefficient of crosstalk of the mirror signal to the VDSL3 line; and
a ninth generation unit, configured to synthesize the VDSL3 signal and the second pre-compensation signal into a third signal, wherein the third signal is sent to VDSL3 customer premises equipment.

10. The vectoring control entity according to claim 8 or 9, wherein the mirror signal is a conjugate symmetrical signal of the first signal.

11. A system, comprising a central office end and a user end, wherein the central office end comprises the vectoring control entity according to either of claim 6 or 7 or any one of claims 8 to 10, and the user end comprises customer premises equipment.

## Patentansprüche

1. Verfahren zum Senden eines Signals, wobei das Verfahren von einer Vektorisierungssteuerentität durchgeführt wird und Folgendes umfasst:
Erzeugen (310) eines ersten Signals in einem ersten Frequenzband durch Verwenden von zu sendenden Daten, wobei das erste Frequenzband ein VDSL2-Frequenzband meint;
Erzeugen (320) eines ersten Vorkompensierungssignals in einem zweiten Frequenzband gemäß einem VDSL3-Signal des zweiten Frequenzbandes und einem Übersprechkoeffizienten einer VDSL3-Leitung zu einer VDSL2-Leitung, wobei das zweite Frequenzband ein VDSL3-Frequenzband meint, das sich nicht mit dem VDSL2-Frequenzband überlappt, und das erste Vorkompensierungssignal verwendet wird, um Außerbandfernübersprechen der VDSL3-Leitung zur VDSL2-Leitung zu unterdrücken, nachdem das Vorkompensierungssignal von einer VDSL2-Kundenstandorteinrichtung empfangen wurde; und
Synthetisieren (330) des ersten Signals und des ersten Vorkompensierungssignals zu einem zweiten Signal und Senden des zweiten Signals an die VDSL2-Kundenstandorteinrichtung;
wobei der Übersprechkoeffizient der VDSL3-Leitung zur VDSL2-Leitung auf folgende Weise erhalten wird:
Senden einer Pilotsequenz an die VDSL2-Kundenstandorteinrichtung;
Empfangen eines Fehlersignals, das von der VDSL2-Kundenstandorteinrichtung zurückgegeben wird; und
Berechnen des Übersprechkoeffizienten der VDSL3-Leitung zur VDSL2-Leitung gemäß dem Fehlersignal.

2. Verfahren nach Anspruch 1, wobei das erste Vorkompensierungssignal gleich einem Produkt aus dem VDSL3-Signal des zweiten Frequenzbandes und dem Übersprechkoeffizienten ist.

3. Verfahren nach Anspruch 1 oder 2, das ferner Folgendes umfasst:
Erzeugen eines Spiegelsignals des ersten Signals in einem zweiten Frequenzband, wobei das zweite Frequenzband ein VDSL3-Frequenzband meint, das sich nicht mit dem VDSL2-Frequenzband überlappt; und
Synthetisieren des ersten Signals und des ersten Vorkompensierungssignals zu einem zweiten Signal und Senden des zweiten Signals an die VDSL2-Kundenstandorteinrichtung umfasst:
Synthetisieren des ersten Signals, des ersten Vorkompensierungssignals und des Spiegelsignals zum zweiten Signal und Senden des zweiten Signals an die VDSL2-Kundenstandorteinrichtung;

4. Verfahren nach Anspruch 3, das ferner Folgendes umfasst:
Erzeugen eines zweiten Vorkompensierungssignals im zweiten Frequenzband gemäß dem Spiegelsignal und einem Übersprechkoeffizienten des Spiegelsignals zur VDSL3-Leitung und
Synthetisieren des VDSL3-Signals und des zweiten Vorkompensierungssignals zu einem dritten Signal und Senden des dritten Signals an die VDSL3-Kundenstandorteinrichtung.

5. Verfahren nach Anspruch 3 oder 4, wobei das Spiegelsignal ein konjugiertes symmetrisches Signal des ersten Signals ist.

6. Vektorisierungssteuerentität, die Folgendes umfasst:
eine erste Erzeugungseinheit (510), die dazu ausgelegt ist, ein erstes Signal in einem ersten Frequenzband durch Verwenden von zu sendenden Daten zu erzeugen, wobei das erste Frequenzband ein VDSL2-Frequenzband meint;
eine zweite Erzeugungseinheit (520), die dazu ausgelegt ist, ein erstes Vorkompensierungssignal in einem zweiten Frequenzband gemäß einem VDSL3-Signal des zweiten Frequenzbandes und einem Übersprechkoeffizienten einer VDSL3-Leitung des zweiten Frequenzbandes zu einer VDSL2-Leitung zu erzeugen, wobei das zweite Frequenzband ein VDSL3-Frequenzband meint, das sich nicht mit dem VDSL2-Frequenzband überlappt, und das erste Vorkompensierungssignal verwendet wird, um Außerbandfernübersprechen der VDSL3-Leitung zur VDSL2-Leitung zu unterdrücken, nachdem das Vorkompensierungssignal von einer VDSL2-Kundenstandorteinrichtung empfangen wurde; und
eine dritte Erzeugungseinheit (530), die dazu ausgelegt ist, das erste Signal und das erste Vorkompensierungssignal zu einem zweiten Signal zu synthetisieren und das zweite Signal zur VDSL2-Kundenstandorteinrichtung zu senden;
wobei die zweite Erzeugungseinheit speziell Folgendes umfasst:
eine erste Sendeeinheit, die dazu ausgelegt ist, eine Pilotsequenz an die VDSL2-Kundenstandorteinrichtung zu senden;
eine erste Empfangseinheit, die dazu ausgelegt ist, ein Fehlersignal, das von der VDSL2-Kundenstandorteinrichtung zurückgegeben wird, zu empfangen; und
eine erste Berechnungseinheit, die dazu ausgelegt ist, den Übersprechkoeffizienten der VDSL3-Leitung zur VDSL2-Leitung gemäß dem Fehlersignal zu berechnen.

7. Vektorisierungssteuerentität nach Anspruch 6, wobei das erste Vorkompensierungssignal gleich einem Produkt aus dem VDSL3-Signal des zweiten Frequenzbandes und dem Übersprechkoeffizienten ist.

8. Vektorisierungssteuerentität nach Anspruch 6 oder 7, die ferner Folgendes umfasst:
eine fünfte Erzeugungseinheit, die dazu ausgelegt ist, ein Spiegelsignal des ersten Signals in einem zweiten Frequenzband zu erzeugen, wobei das zweite Frequenzband ein VDSL3-Frequenzband meint, das sich nicht mit dem VDSL2-Frequenzband überlappt; und
eine siebte Erzeugungseinheit, die dazu ausgelegt ist, das erste Signal, das erste Vorkompensierungssignal und das Spiegelsignal zum zweiten Signal zu synthetisieren und das zweite Signal an die VDSL2-Kundenstandorteinrichtung zu senden.

9. Vektorisierungssteuerentität nach Anspruch 8, die ferner Folgendes umfasst:
eine achte Erzeugungseinheit, die dazu ausgelegt ist, ein zweites Vorkompensierungssignal im zweiten Frequenzband gemäß dem Spiegelsignal und einem Übersprechkoeffizienten des Spiegelsignals zur VDSL3-Leitung zu erzeugen; und
eine neunte Erzeugungseinheit, die dazu ausgelegt ist, das VDSL3-Signal und das zweite Vorkompensierungssignal zu einem dritten Signal zu synthetisieren, wobei das dritte Signal an die VDSL3-Kundenstandorteinrichtung gesendet wird.

10. Vektorisierungssteuerentität nach Anspruch 8 oder 9, wobei das Spiegelsignal ein konjugiertes symmetrisches Signal des ersten Signals ist.

11. System, das ein Vermittlungsstellenende und ein Benutzerende umfasst, wobei das Vermittlungsstellenende die Vektorisierungssteuerentität nach Anspruch 6 oder 7 oder einem der Ansprüche 8 bis 10 und das Benutzerende eine Kundenstandorteinrichtung umfasst.

## Revendications

1. Procédé d'envoi d'un signal, le procédé étant réalisé par une entité de contrôle vectoriel, le procédé consistant à :
générer (310) un premier signal dans une première bande de fréquences au moyen de données à envoyer, la première bande de fréquences désignant une bande de fréquences VDSL2 ;
générer (320) un premier signal de précompensation dans une seconde bande de fréquences selon un signal VDSL3 de la seconde bande de fréquences et un coefficient de diaphonie d'une ligne VDSL3 sur une ligne VDSL2, la seconde bande de fréquences désignant une bande de fréquences VDSL3 qui ne coïncide pas avec la bande de fréquences VDSL2, et le premier signal de précompensation étant utilisé pour annuler une diaphonie distante hors bande de la ligne VDSL3 sur la ligne VDSL2 après la réception du premier signal de précompensation par un équipement de local d'abonné VDSL2 ; et
synthétiser (330) le premier signal et le premier signal de précompensation en un deuxième signal, et envoyer le deuxième signal à l'équipement de local d'abonné VDSL2 ;
le coefficient de diaphonie de la ligne VDSL3 sur la ligne VDSL2 étant obtenu de la façon suivante :
envoyer une séquence pilote à l'équipement de local d'abonné VDSL2 ;
recevoir un signal d'erreur renvoyé par l'équipement de local d'abonné VDSL2 ; et
calculer le coefficient de diaphonie de la ligne VDSL3 sur la ligne VDSL2 selon le signal d'erreur.

2. Procédé selon la revendication 1, dans lequel le premier signal de précompensation est égal à un produit du signal VDSL3 de la seconde bande de fréquences et du coefficient de diaphonie.

3. Procédé selon la revendication 1 ou 2, consistant en outre à :
générer, dans une seconde bande de fréquences, un signal miroir du premier signal, la seconde bande de fréquences désignant une bande de fréquences VDSL3 qui ne coïncide pas avec la bande de fréquences VDSL2 ; et
la synthétisation du premier signal et du premier signal de précompensation en un deuxième signal, et l'envoi du deuxième signal à l'équipement de local d'abonné VDSL2 consistant à :
synthétiser le premier signal, le premier signal de précompensation et le signal miroir en le deuxième signal, et envoyer le deuxième signal à l'équipement de local d'abonné VDSL2.

4. Procédé selon la revendication 3, consistant en outre à :
générer un second signal de précompensation dans la seconde bande de fréquences selon le signal miroir et un coefficient de diaphonie du signal miroir sur la ligne VDSL3 ; et
synthétiser le signal VDSL3 et le second signal de précompensation en un troisième signal, et envoyer le troisième signal à un équipement de local d'abonné VDSL3.

5. Procédé selon la revendication 3 ou 4, dans lequel le signal miroir est un signal symétrique conjugué du premier signal.

6. Entité de contrôle vectoriel, comprenant :
une première unité de génération (510), configurée pour générer un premier signal dans une première bande de fréquences au moyen de données à envoyer, la première bande de fréquences désignant une bande de fréquences VDSL2 ;
une deuxième unité de génération (520), configurée pour générer un premier signal de précompensation dans une seconde bande de fréquences selon un signal VDSL3 de la seconde bande de fréquences et un coefficient de diaphonie d'une ligne VDSL3 de la seconde bande de fréquences sur une ligne VDSL2, la seconde bande de fréquences désignant une bande de fréquences VDSL3 qui ne coïncide pas avec la bande de fréquences VDSL2, et le premier signal de précompensation étant utilisé pour annuler une diaphonie distante hors bande de la ligne VDSL3 sur la ligne VDSL2 après la réception du premier signal de précompensation par un équipement de local d'abonné VDSL2 ; et
une troisième unité de génération (530), configurée pour synthétiser le premier signal et le premier signal de précompensation en un deuxième signal, et envoyer le deuxième signal à l'équipement de local d'abonné VDSL2 ;
la deuxième unité de génération comprenant spécifiquement :
une première unité d'envoi, configurée pour envoyer une séquence pilote à l'équipement de local d'abonné VDSL2 ;
une première unité de réception, configurée pour recevoir un signal d'erreur renvoyé par l'équipement de local d'abonné VDSL2 ; et
une première unité de calcul, configurée pour calculer le coefficient de diaphonie de la ligne VDSL3 sur la ligne VDSL2 selon le signal d'erreur.

7. Entité de contrôle vectoriel selon la revendication 6, dans laquelle le premier signal de précompensation est égal à un produit du signal VDSL3 de la seconde bande de fréquences et du coefficient de diaphonie.

8. Entité de contrôle vectoriel selon la revendication 6 ou 7, comprenant en outre :
une cinquième unité de génération, configurée pour générer, dans une seconde bande de fréquences, un signal miroir du premier signal, la seconde bande de fréquences désignant une bande de fréquences VDSL3 qui ne coïncide pas avec la bande de fréquences VDSL2 ; et
une septième unité de génération, configurée pour synthétiser le premier signal, le premier signal de précompensation et le signal miroir en le deuxième signal, et envoyer le deuxième signal à l'équipement de local d'abonné VDSL2.

9. Entité de contrôle vectoriel selon la revendication 8, comprenant en outre :
une huitième unité de génération, configurée pour générer un second signal de précompensation dans la seconde bande de fréquences selon le signal miroir et un coefficient de diaphonie du signal miroir sur la ligne VDSL3 ; et
une neuvième unité de génération, configurée pour synthétiser le signal VDSL3 et le second signal de précompensation en un troisième signal, le troisième signal étant envoyé à un équipement de local d'abonné VDSL3.

10. Entité de contrôle vectoriel selon la revendication 8 ou 9, dans laquelle le signal miroir est un signal symétrique conjugué du premier signal.

11. Système comprenant une extrémité côté central et une extrémité côté utilisateur, l'extrémité côté central comprenant l'entité de contrôle vectoriel selon l'une des revendications 6 et 7 ou l'une quelconque des revendications 8 à 10, et l'extrémité côté utilisateur comprenant un équipement de local d'abonné.
